Europäisches Patentamt

**European Patent Office**

**Office européen des brevets**

(11) Veröffentlichungsnummer: **0 239 144**
**A2**

(12) **EUROPÄISCHE PATENTANMELDUNG**

(21) Anmeldenummer: **87200324.9**

(22) Anmeldetag: **25.02.87**

(51) Int. Cl.4: **A22C 11/10**

(30) Priorität: **25.03.86 DE 3610010**

(43) Veröffentlichungstag der Anmeldung:
**30.09.87 Patentblatt 87/40**

(84) Benannte Vertragsstaaten:
**AT CH DE ES FR IT LI SE**

(71) Anmelder: **Niedecker, Herbert, Dipl.-Ing.**
**Am Ellerhang 6**
**D-6240 Königstein 2(DE)**

(72) Erfinder: **Niedecker, Herbert, Dipl.-Ing.**
**Am Ellerhang 6**
**D-6240 Königstein 2(DE)**

(74) Vertreter: **Fischer, Ernst, Dr.**
**Reuterweg 14**
**D-6000 Frankfurt am Main 1(DE)**

(54) Vorrichtung zum Abteilen von Portionspackungen eines unterteilbaren Füllgutes in einer flexiblen Schlauchhülle.

(57) Eine Abteilvorrichtung beispielsweise zum Abteilen von Einzelwürsten aus einer mit Wurstbrät durchgehend gefüllten Schlauchhülle weist gegeläufig linear bewegliche Verdränger (9,10; 19,20) mit dreiecksförmigen Ausschnitten (11; 21) auf, die die Schlauchhülle zu einem Zopf einschnüren und in diesem Bereich das Füllgut im Schlauch verdrängen. Der periodische Antrieb der Verdränger (9,10; 19,20) erfolgt mit Hilfe einer ihrerseits periodisch, in einer Drehrichtung rotierend angetriebenen Steuerscheibe (4), die kreisringförmig ausgebildet ist, und deren Drehachse (2) mit der Schlauchachse und damit der Verdrängeröffnung (12) zusammenfällt. Die Drehung der Steuerscheibe (4) wird auf die Verdränger (9, 10; 19,20) mit Hilfe von Rollen (15; 26) übertragen, welche an den Verdrängern (9,10; 19,20) befestigt sind und eine auf der Steuerscheibe (4) endlos umlaufende Kurvenbahn (16; 27) abtasten.

Fig.1

## Vorrichtung zum Abteilen von Portionspackungen eines unterteilbaren Füllgutes in einer flexiblen Schlauchhülle

Die Erfindung betrifft eine Vorrichtung zum Abteilen von Portionspackungen eines unterteilbaren Füllgutes in einer flexiblen Schlauchhülle durch Einschnüren des gefüllten Schlauches und Aufbringen mindestens eines Verschlußelementes auf den durch axiales Verdrängen des Füllgutes gebildeten Schlauchzopf, mit überlappend und symmetrisch zur Schlauchachse gegenläufig verschiebbaren Verdrängern, die einander zugewandte, im wesentlichen dreiecksförmige Ausschnitte haben, und mit einer periodisch angetriebenen Steuerscheibe, welche bei Drehung um ihre Achse mit Hilfe von Übertragungsgliedern die Verdränger einen aus Schließ-und Öffnungshub bestehenden Arbeitszyklus ausführen läßt.

Derartige Abteilvorrichtungen sind in Verbindung mit Verschließvorrichtungen namentlich zum Abteilen von Einzelwürsten aus einem Wurststrang vielfältig bekannt, beispielsweise aus der DE-AS 10 27 548, der DE-PS 15 86 210 und der DE-OS 25 50 042. Diese Vorrichtungen sind regelmäßig in Arbeitsrichtung hinter einer Füllmaschine angeordnet, welche das Füllgut beispielsweise mit Hilfe eines Füllrohres in die von dessen Außenseite abgezogene Schlauchhülle drückt. Zum Abteilen wird der Füllvorgang gestoppt und die Abteil-sowie die Verschließvorrichtung in Tätigkeit gesetzt. Nach Abschluß ihres Arbeitszyklus' wird der Füllvorgang fortgesetzt.

Bei der aus der DE-PS 15 86 210 bekannten Vorrichtung bestehen die Verdränger aus - schwenkbaren Scherentielen, deren Einschnür-Ausschnitte auf Kreisbogen an den gefüllten Schlauch herangeführt werden. Die Drehung der Steuerscheibe wird über Kniehebel, Stößel und Kipphebel auf die Scherenteile übertragen.

Bekanntgeworden ist jedoch auch die eingangs geschilderte Vorrichtung, bei der die Verdränger linear beweglich geführt sind (wie dies u.a. die DE-AS 10 27 548, die DE-PS 22 47 515 veranschaulichen). Die Bewegung der Steuerscheibe wird dabei durch einen mit Kurvenbahnen versehenen Schieber auf die Verdränger übertragen.

Allen diesen bekannten Abteilvorrichtungen ist der Nachteil gemeinsam, daß der Steuerantrieb der Verdränger apparativ aufwendig ist und im Betrieb die Beschleunigung sowie Verzögerung relativ großer Massen der Übertragungsglieder erfordert. Letzteres ist besonders störend, wenn (auch) die Übertragungsglieder eine hin-und hergehende Bewegung ausführen. Der Erfindung liegt daher die Aufgabe zugrunde, den baulichen Aufwand für den steuernden Antrieb der Verdränger und damit zugleich die bei ihrem Arbeitszyklus zu bewegenden Massen deutlich zu verringern.

Diese Aufgabe wird erfindungsgemäß dadurch gelößt, daß die Steuerscheibe kreisringförmig ausgebildet und derart angeordnet ist, daß ihre Drehachse mit der Schlauchachse zusammenfällt, und daß die Übertragungsglieder aus Abtastelementen bestehen, welche an den Verdrängern befestigt sind und eine an der rotierenden Steuerscheibe angeordnete, endlos umlaufende Kurvenbahn unmittelbar abtasten. Auf diese Weise ist die Steuerscheibe konzentrisch zu bzw. koaxial mit der Einschnürstelle der Verdränger angeordnet. Sie umgibt diese gewissermaßen, und die Masse der an den Verdrängern angebrachten Abtastelemente kann sehr gering sein: Vorzugsweise bestehen die Abtastelemente aus Rollen, die an den Verdrängern gelagert sind und formschlüssig in die an der Steuerscheibe ausgebildete Kurvenbahn eingreifen; die Abtastelemente können aber auch Gleitsteine sein.

Im Betrieb der Abteilvorrichtung brauchen außer den Verdrängern selbst nur die Abtastelemente umgesteuert, d.h. abwechselnd beschleunigt und verzögert zu werden, weil die endlos umlaufenden Kurvenbahnen die Rotation der Steuerscheibe in einer Drehrichtung möglich machen. Daren besteht auch die entscheidende Besonderheit der Erfindung gegenüber der Steueranordnung, die aus der US-PS 2 113 658 für eine Maschine zum Herstellen, portionsweisen Füllen und Verschweißen von Schlauchbeuteln bekannt ist.

Bevorzugt wird die Erfindung bei einer solchen Abteilvorrichtung angewendet, welche in bekannter Weise zwei Paare gegenläufig verschiebbarer Verdränger aufweist, die im Schließzustand in axialen Abstand spreizbar sind, um auf diese Weise einen längeren, von Füllgut freien Zopf zu erhalten, auf welchen auch zwei Verschlüsse mit Abstand nebeneinander aufgebracht werden können (DE-OS 25 50 042). Durch Aufschneiden des Zopfes zwischen den beiden Verschlüssen läßt sich die Kette aneinander hängender Portionspackungen in kürzere Ketten oder Einzelpackungen unterteilen. Bei einer derartigen Vorrichtung ist erfindungsgemäß vorgesehen, daß das axial abspreizbare Verdrängerpaar Abtastelemente aufweist, welche eine weitere an der Steuerscheibe angeordnete Kurvenbahn unmittelbar abtasten. Während bei der oben erwähnten ersten Kurvenbahn für die Schließ-und Öffnungssteuerung der Verdränger die Radiusveränderung der Steuerflanken maßgeblich ist, sind es bei der vorerwähnten zweiten Kurvenbahn sich gegenüber der Hauptebene der Steuerscheibe (parallel zur Schlauch-und Steuerachse) hebende und senkende Steuerflanken, welche den Spreizhub des axial abspreizbaren Verdrängerpaares bewirken. Aufgrund der Relativlage von kreisringförmiger Steuerscheibe und Verdrängerpaaren können auch hier die Abtastelemente einfache Rollen sein.

Bei den vorstehend genannten Abteilvorrichtungen mit spreizbaren Verdrängerpaaren ist es in Verbindung mit linear schließenden und öffnenden Verdrängern bekannt, zwei parallele Führungsstangen vorzusehen, auf denen das eine Verdrängerpaar relativ zum anderen axial verschieblich ist. Bei einer solchen Ausgestaltung der Vorrichtung ist gemäß einer Weiterbildung der Erfindung vorgesehen, daß die Achsen der beiden Führungsstangen mit der Schlauch-und Steuerscheibenachse in einer Ebene liegen. Auf diese Weise wird jegliches Drehmoment vermieden, welches entsteht, wenn die im Bereich der Führungsstangen eingeleitete Spreizkraft gegenüber der in der Schlauchachse beim Spreizen auftretenden Reaktionskraft versetzt ist.

Der Aufbau und die Betriebsweise der neuen Abteilvorrichtung lassen sich noch weiter vereinfachen, wenn die den Schließ-und Öffnungshub der Verdränger steuernden Abtastrollen an den die Verdränger verbindenden Führungsstangen gelagert sind. Dann ist es auch möglich, die Rollen als Exzenterrollen auszubilden und durch Verdrehen der Führungsstange um ihre Längsachsen den Hub der Verdränger zu ändern. Eine solche Änderung oder genauer Hubverlagerung ist dann erforderlich, wenn der Durchmesser der Einschnüröffnung im Schließzustand der Verdränger der Dicke des Schlauchmaterials und damit der Dicke des sich bildenden Zopfes angepaßt werden muß.

Die Zeichnung veranschaulicht die Erfindung an einem Ausführungsbeispiel, und zwar zeigt:

Fig. I die Abteilvorrichtung in perspektivischer Ansicht;

Fig. 2 einen Schnitt gemäß der Linie A-A in Fig. I, und zwar in der Ruhestellung beispielsweise während eines Füllvorganges;

Fig. 3 eine Schnitt ebenfalls gemäß der Linie A-A in Fig. I, jedoch in der geschlossenen (einschnürenden) und gespreizten Stellung der Verdränger; und

Fig. 4 die Steuerscheibe mit den Kurvenbahnen in perspektivischer Ansicht.

Ein Gehäuse I mit einer zur Mittelachse 2 konzentrischen Öffnung 3 umschließt und lagert eine kreisringförmige Steuerscheibe 4, dessen zentrische Öffnung 5 mit der koaxialen Öffnung 3 des Gehäuses I fluchtet, An ihrem Umfang ist die Steuerscheibe 4 mit einer Verzahnung 6 versehen, in die - in nicht dargestellter Weise - ein Antrieb mittels Ritzel, Zahnriemen o.ä. eingreift. Ebenfalls weggelassen ist die Halterung des Gehäuses I, welche dieses und damit die Abteilvorrichtung im Betrieb gegenüber einer Füllvor richtung so ausrichtet, daß sich die Mittelachse 2 koaxial zur Achse des Füllrohres der Fullmaschine erstreckt, von welchem der Schlauch abgezogen wird, der durch das Füllrohr hindurch mit Füllgut beschickt wird.

Oberhalb und unterhalb der Achse 2 ist ein Paar sich horizontal und quer zu den Öffnungen 3, 5 erstreckender Führungsstangen 7 angeordnet, welche mit ihren halbierten Enden 8 am Gehäuse I befestigt sind. Diese Führungsstangen 7 bilden gewissermaßen das Rückgrat der gesamten nachstehend beschriebenen Verdrängermechanik und definieren zugleich deren Bezugsebene.

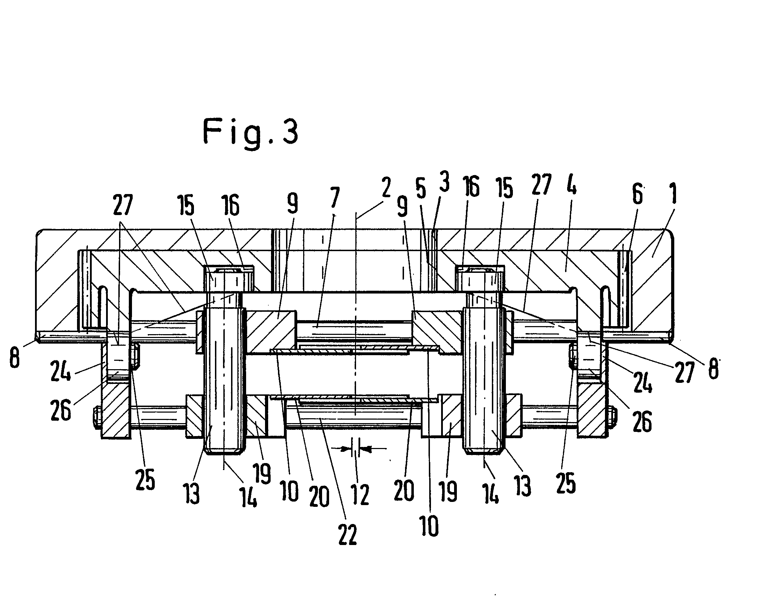

Auf den Stangen 7 sind die Backen 9 eines ersten, gehäusenahen Paares von Verdrängerelementen linear verschieblich gehalten und geführt. An den Backen 9 sind die zugehörigen Verdrängerbleche IO aufeinander zu weisend und einander überlappend so befestigt, daß die im wesentlichen dreiecksförmigen Ausschnitte II eine geschlossene, zur Achse 2 zentralsymmetrische Öffnung I2 umschreiben. Durch gegenläufiges Verschieben der von den Backen 9 und den Verdrängerblechen IO gebildeten Verdränger auf den Führungsstangen 7 läßt sich die Öffnung I2 in ihrer Größe verändern, und zwar von der in den Fig. I und 2 gezeigten größten Öffnungsweite bis zu der der Fig. 3 entnehmbaren kleinsten Öffnungsweite.

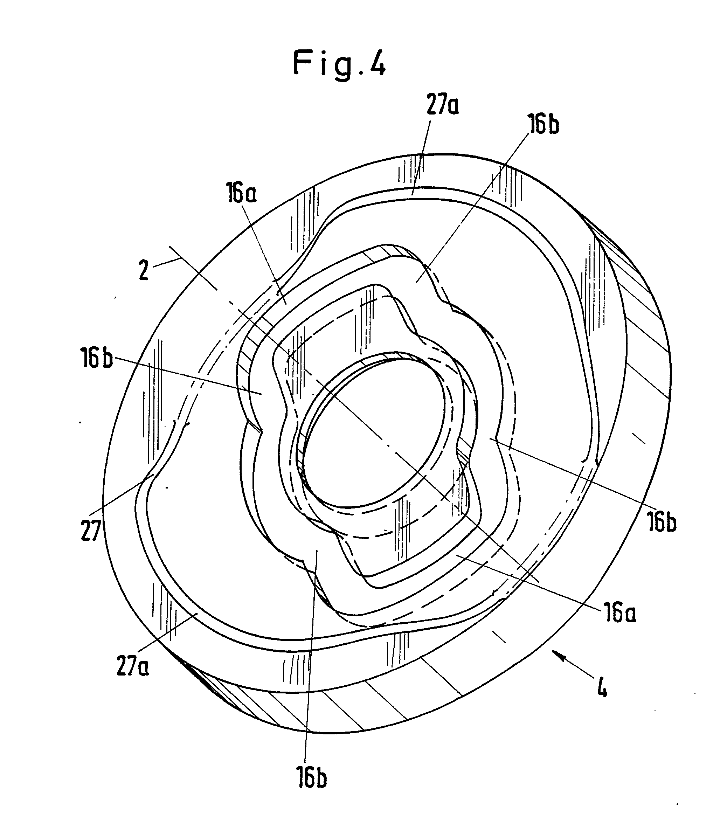

Der Steuerung dieser Verschiebung dient ein Paar von Führungsstangen I3, welche sich zwischen den Führungsstangen 7 in senkrechter Richtung zu diesen erstrecken und die Backen 9 durchsetzen. Mit der Achse 2 liegen die Achsen I4 der Stangen I3 in einer Ebene. An den gehäuseseitigen Enden der Führungsstangen I3 sind Exzenterrollen I5 befestigt, welche in Kurvenbahnen I6 der Steuerscheibe 4 eingreifen und diese abtasten. Da sich über den Umfang der Kurvenbahnen I6 deren radialer Abstand von der Mittelachse 2 ändert (vgl. Fig. 4), vollführen die Führungsstangen I4 unter Mitnahme der Verdränger 9, IO während einer Umdrehung der Steuerscheibe 4 eine gegenläufige Hin-und Herbewegung, während der sich die von den Ausschnitten II der Verdrängerbleche IO umschriebene Öffnung I2 bis zu ihrem Minimalwert verkleinert und wieder bis zu ihrem Maximalwert vergrößert.

Im Rahmen der Exzentrizität der Rollen I5 lassen sich diese Maximal-und Minimalwerte der Größe der Öffnung I2 durch Verdrehen der Führungsstangen I3 um ihre Achsen I4 verändern.

Auf den Führungsstangen 13 ist ferner ein zweites Paar von Verdrängern gehalten und gegenüber dem ersten, aus den Backen 9 und den Verdrängerblechen 10 bestehenden Paar von Verdrängern abspreizbar geführt.

Dieses zweite Verdrängerpaar besteht aus Backen 19 und Verdrängerblechen 20, welche ebenfalls einander überlappen und Ausschnitte 21 haben, die mit den dreiecksförmigen Ausschnitten 11 der Verdrängerbleche 10 fluchten. Wiederum quer zu den Führungsstangen 13 sind die Backen 19 von zwei parallel zueinander und zu den Führungsstangen 7 des ersten Verdrängerpaares 9, 10 verlaufenden Führungsstangen 22 durchsetzt, welche sich demgemäß auch oberhalb und unterhalb der Mittelachse 2 horizontal erstrecken. Endseits sind die Führungsstangen 22 mittels Traversen 23 zu einem Rechteckrahmen verbunden. An den Traversen 23 sind mittig zwischen den Führungsstangen 22 Achsträger 24 ausgebildet, welche sich zum Gehäuse 1 und zur Steuerscheibe 4 hin und somit parallel zu den Führungsstangen 13 erstrecken. An den Achsträgern 24 sind Zapfen 25 befestigt, die Abtastrollen 26 lagern. Die Abtastrollen 26 laufen auf einer Kurvenbahn 27 ab, welche außerhalb der Kurvenbahn 16 in Kreisform um die Achse 2 auf der gehäuseabgewandten Seite der Steuerscheibe 4 ausgebildet ist und über ihren Umfang axial vorspringende Abschnitte hat (vgl. Fig. 4).

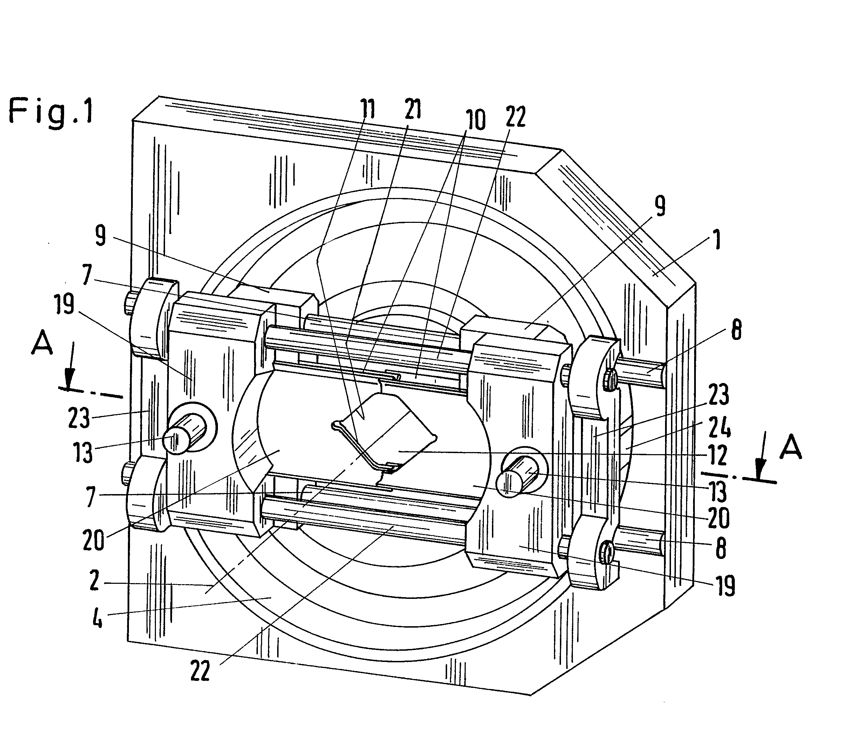

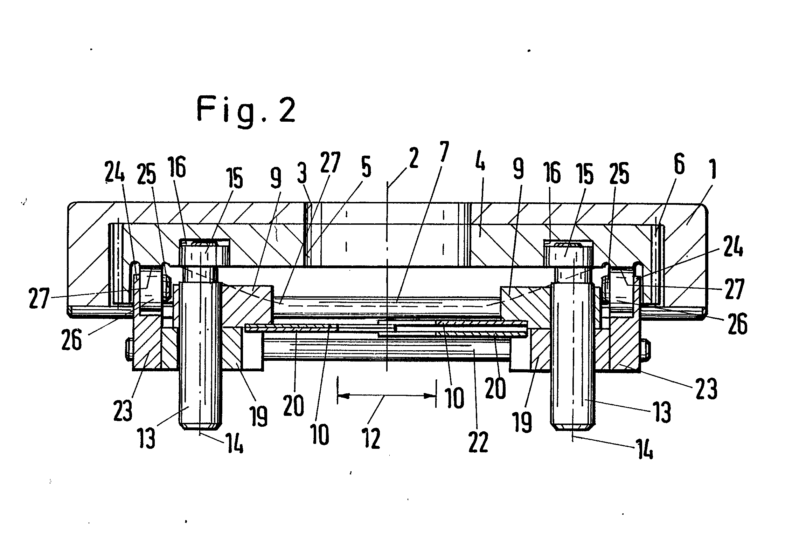

Zwischen den beiden (extremen) Stellungen der Verdrängermechanik gemäß Fig. 2 einerseits und Fig. 3 andererseits liegt eine Verdrehung der Steuerscheibe 4 um 90°. In der in Fig. 2 dargestellten Ruhe-oder Ausgangsstellung liegen die Verdrängerpaare 9, 10 und 19, 20 ungespreizt aneinander, und die Verdränger jedes Paares sind diametral auseinandergefahren, so daß die Öffnung 12 um die Mittelachse 2 ihren Größtwert hat. Dem entspricht, daß sich die Rollen 15 in denjenigen Abschnitten 16a der Kurvenbahn 16 befinden, die den größten radialen Abstand von der Achse 2 aufweisen (Fig. 4). Wird jetzt die Steuerscheibe 4 gedreht, so gelangen zunächst die Abtastrollen 15 in sich mit einer Komponente radial einwärts erstreckende Flanken 16b der Kurvenbahn 16, wodurch die Stangen 13 aufeinander zu bewegt werden und die Backen 9, 19 aller Verdränger mitnehmen. Dies führt zu entsprechender Verkleinerung der von den dreiecksförmigen Ausschnitten 11, 21 bestimmten Öffnung 12, und ein sich durch die Öffnung 12 hindurch erstreckender Schlauch wird unter gleichzeitiger Verdrängung seines Füllgutes eingeschnürt.

Bei weiterer Drehung der Steuerscheibe 4 gelangen die Abtastrollen 26 auf die axial vorspringenden Abschnitte 27a der Kurvenbahn 27 (Fig. 4), so daß das aus den Backen 19 und Verdrängerblechen 20 bestehende gehäuseferne Verdrängerpaar unter axialer Verschiebung auf den Führungsstangen 13 gegenüber dem anderen Verdrängerpaar (Backen 9, Verdrängerbleche 10) abgespreizt wird. Zwischen den Verdrängerpaaren erstreckt sich dann ein Schlauchzopf, auf den in üblicher Weise ein oder zwei Verschlußelemente aufgebracht werden können. Fig. 3 veranschaulicht diese Situation (unter Weglassung des Schlauchzopfes), und es ist erkennbar, daß die Öffnung 12 dabei ihren Kleinstwert hat. Nach Weiterdrehung der Steuerscheibe 4 um 90° hat die Verdrängermechanik ihre Ausgangsstellung (Fig. 2) wieder erreicht, und der Arbeitszyklus ist beendet.

Die Rückführung des zweiten, aus den Backen 19 und den Verdrängerblechen 20 bestehenden Verdrängerpaares in die in Fig. 2 dargestellte Ausgangslage, welche nicht von der Kurvenbahn 27 in Verbindung mit den Abtastrollen 26 erzwungen wird, kann in geeigneter Weise gewährleistet werden, beispielsweise mit Hilfe von Pneumatikzylindern, welche an den freien Enden der Führungsstangen 13 angeordnet sind und auf die Backen 19 wirksam werden, wenn im Bereich des jeweils zweiten Viertels der Drehung der Steuerscheibe 4 die Abtastrollen 26 in die 'tiefer' liegenden Bereiche der Kurvenbahn 27 gelangen.

Fig. 4 veranschaulicht die Ausbildung der Kurvenbahnen 16 und 27 in der Steuerscheibe 4. Während die Kurvenbahn 16 gewissermaßen in der Hauptebene der Steuerscheibe 4 verläuft und Abschnitte (z.B. 16a und 16b) unterschiedlichen Abstands von der Achse 2 hat, verläuft die Kurvenbahn 27 ringförmig um die Achse 2, also mit gleichbleibendem Abstand von dieser, hat aber Abschnitte 27a, die axial gegenüber anderen Abschnitten vorragen, also gegenüber der vorerwähnten Hauptebene versetzt sind.

## Ansprüche

1. Vorrichtung zum Abteilen von Portionspackungen eines unterteilbaren Füllgutes in einer flexiblen Schlauchhülle durch Einschnüren des gefüllten Schlauches und Aufbringen mindestens eines Verschlußelements auf den durch axiales Verdrängen des Füllgutes gebildeten Schlauchzopf, mit überlappend und symmetrisch zur Schlauchachse gegenläufig verschiebbaren Verdrängern, die einander zugewandte, im wesentlichen dreiecksförmige Ausschnitte haben, und mit einer periodisch angetriebenen Steuerscheibe, welche bei Drehung um ihre Achse mit Hilfe von Übertragungsgliedern die Verdränger einen aus Schließ-und Öffnungshub bestehenden Arbeitszyklus ausführen läßt, dadurch gekennzeichnet, daß die Steuerscheibe (4) kreisringförmig ausgebildet und derart angeordnet ist, daß ihre Drehachse (2) mit der Schlauchachse zusammenfällt, und daß die Übertragungsglieder aus Abtastelementen (Rollen l5) bestehen, welche an den Verdrängern (9,l0) befestigt sind und eine an der rotierenden Steuerscheibe (4) angeordnete, endlos umlaufende Kurvenbahn (l6) unmittelbar abtasten.

2. Vorrichtung nach Anspruch I mit zwei Paaren gegenläufig verschiebbarer Verdränger, die im Schließzustand in axialen Abstand spreizbar sind, dadurch gekennzeichnet, daß das axial abspreizbare Verdrängerpaar (l9,20) Abtastelemente (Rollen 26) aufweist, welche eine weitere an der Steuerscheibe (4) angeordnete, endlos umlaufende Kurvenbahn (27) unmittelbar abtasten.

3. Vorrichtung nach Anspruch 2, dadurch gekennzeichnet, daß die der Verschiebebewegung der Verdränger (9, l0) zugeordnete Kurvenbahn (l6) einen wechselnden radialen Abstand von der Drehachse (2) der Steuerscheibe (4), die der Spreizbewegung zugeordnete Kurvenbahn (27) hingegen einen wechselnden achsparallelen Abstand von der Hauptebene der Steuerscheibe (4) hat.

4. Vorrichtung nach Anspruch I, 2 oder 3 dadurch gekennzeichnet, daß die Abtastelemente an den Verdrängern gelagerte Rollen (l5,26) sind, die an den Kurvenbahnen (l6,27) ablaufen.

5. Vorrichtung nach Anspruch 2, 3 oder 4 mit zwei parallelen Führungsstangen, auf denen das eine Verdrängerpaar relativ zum anderen axial verschieblich und damit spreizbar ist, dadurch gekennzeichnet, daß die Achsen (l4) der beiden Führungsstangen (l3) mit der Schlauch-und Steuerscheibenachse (2) in einer Ebene liegen.

6. Vorrichtung nach Anspruch 5, dadurch gekennzeichnet, daß die den Schließ-und Öffnungshub der Verdränger (9,l0; l9,20) steuernden Abtastrollen (l5) an den die Verdrängerpaare verbindenden Führungsstangen (l3) gelagert sind.

7. Vorrichtung nach Anspruch 6, dadurch gekennzeichnet, daß die Rollen (l5) Exzenterrollen und zur Hubänderung der Verdränger (9,l0; l9,20) durch Verdrehen der Führungsstangen (l3) um ihre Längsachsen (l4) verstellbar sind.

Fig.1

0 239 144

# Fig. 2

0 239 144

# Fig.3

0 239 144

# Fig.4